# EUROPEAN PATENT APPLICATION

(11) **EP 1 810 898 A1**
(43) Date of publication of application: **25.07.2007**
(21) Application number: 06100536.9
(22) Date of filing: 18.01.2006
(51) Int. Cl.: B60S 1/34

(54) **A windscreen wiper arm**

(71) Applicant: Federal-Mogul S.A., 6790 Aubange (BE)
(72) Inventor: Boland, Xavier, 6700 Arlon (BE)
(74) Representative: Hooiveld, Arjen Jan Winfried

(57) **Abstract**

A windscreen wiper arm (8), particularly for automobiles, comprising a mounting head (18) on a drive shaft (19) and an arm member (20) pivotally connected to the mounting head (18) by means of a pivot (21), wherein the arm member (20) has a substantially U-shaped cross-section near said pivot (21) comprising two side walls (25,26), wherein a part of the mounting head (18) extends between the side walls (25,26) and beyond said pivot (21), and wherein a spring (22) is hooked with its first end on the mounting head (18), with the special feature that said spring (22) is hooked with its second end on a single holding element (29) connected to the arm member (20).

## Description

The present invention relates to a windscreen wiper arm, particularly for automobiles, comprising a mounting head on a drive shaft and an arm member pivotally connected to the mounting head by means of a pivot, wherein the arm member has a substantially U-shaped cross-section near said pivot comprising two side walls, wherein a part of the mounting head extends between the side walls and beyond said pivot, and wherein a spring is hooked with its first end on the mounting head.

Such a windscreen wiper arm is known from German patent publication no. 34 33 106 (SWF Auto-Electric GmbH). The arm member described therein is connected to a wiper rod, wherein one end of the wiper rod extends inside the U-shaped cross-section of the arm member. The side walls of the arm member are locally folded around the wiper rod, while a holder is folded around said end of the rod. The spring of this prior art windscreen wiper arm is hooked with its first end on a pin on the mounting head and with its second end on two eyes of the holder.

A disadvantage of the windscreen wiper arm known from the above German patent publication is that said windscreen wiper arm comprises said wiper rod as an additional constructional part for accommodating the spring, while complex machinery and tools are needed in manufacturing and mounting said wiper rod, with all expenses involved. Furthermore, said wiper rod has to have a minimum length in order to fold said holder around said end of the rod.

It is an object of the invention to obviate this disadvantage, in the sense that at minimum costs - without using complex machinery and additional tools - a simple windscreen wiper arm with less constructional parts for mounting the spring is proposed. It is noted that the present invention is not restricted to cars, but also refers to rail coaches and other (fast) vehicles.

Thereto, according to the invention a windshield wiper arm mentioned in the preamble is characterized in that said spring is hooked with its second end on a single holding element connected to the arm member. In other words, by connecting the said holding element directly to the arm member less raw material is used, while additional tooling steps are avoided. Preferably, said holding element is detachably connected to said arm member. Said pivot is preferably a pivot pin, whereas said spring is preferably hooked with its first end on a pin on said mounting head.

In a preferred embodiment of a windscreen wiper arm in accordance with the invention at least one sidewall of said U-shaped cross-section of said arm member is provided with a lip abutting against stop surfaces of said holding element. Said lip prevents any movement of said holding element in longitudinal direction (that is along the length of said arm member) as a result of a force of said spring, as well as in transverse direction (i.e. perpendicular to said arm member).

In another preferred embodiment of a windscreen wiper arm according to the invention said stop surfaces are positioned on the legs of an L-shaped part of said holding element. In other words, said lip abuts said legs of said L-shaped part and thus blocks any movement of said holding element inside said arm member.

In another preferred embodiment of a windscreen wiper arm in accordance with the invention said lip is bend inwardly away from said side wall.

In another preferred embodiment of a windscreen wiper arm according to the invention said spring is hooked with its second end on a base of a U-shaped cross-section of said holding element. Particularly, said spring is hooked with its second end into a hole provided in said base of said U-shaped cross-section. Said hole is particularly stamped in the material of the holding element.

In another preferred embodiment of a windscreen wiper arm in accordance with the invention the arm member is made of a plastic material. Preferably, also the mounting head is made of a plastic material.

The invention also relates to a windscreen wiper device comprising an windshield wiper arm according to the invention. Particularly, said windshield wiper device comprises an elastic, elongated carrier element, as well as an elongated wiper blade of a flexible material, which can be placed in abutment with a windscreen to be wiped, which wiper blade includes opposing longitudinal grooves on its longitudinal sides, in which grooves spaced-apart longitudinal strips of the carrier element are disposed, wherein neighbouring ends of said longitudinal strips are interconnected by a respective connecting piece, which windscreen wiper device comprises a connecting device for the windscreen wiper arm according to the invention. Such a windscreen wiper device is thus designed as a "yokeless" wiper device, wherein use is no longer made of several yokes pivotally connected to each other, but wherein the wiper device is biased by the carrier element, as a result of which is exhibits a specific curvature. The present windscreen wiper arm may comprise a pivot pin on one side thereof, which is inserted sideways into a through hole of the connecting device. It is noted that the present invention is not restricted to such a "yokeless blade", although being advantageous therein, but also extends to other types of windscreen wiper devices, such as the ones with yokes as referred to above.

The invention will now be explained in more detail with reference to figures illustrated in a drawing, wherein:
- Figures 1 and 2 are perspective, schematic views of a prior art windshield wiper device of the "yokeless" type, wherein the windscreen wiper arm is in a wiping position (figure 1) and in a mounting position (figure 2), respectively;
- Figure 3 shows a detail of the windscreen wiper device of figures 1 and 2;
- Figure 4 is a bottom view of the windscreen wiper arm of figures 1 and 2;
- Figure 5A is a perspective schematic view of two embodiments of a holding element according to the invention, while figure 5B shows a bottom view and a side view of a windscreen wiper arm according to the invention to be used in a windscreen wiper device of the type of figures 1 and 2; and
- Figures 6A and 6B correspond to figures 5A and 5B, with the difference that the windscreen wiper arm is shown in mounted position.

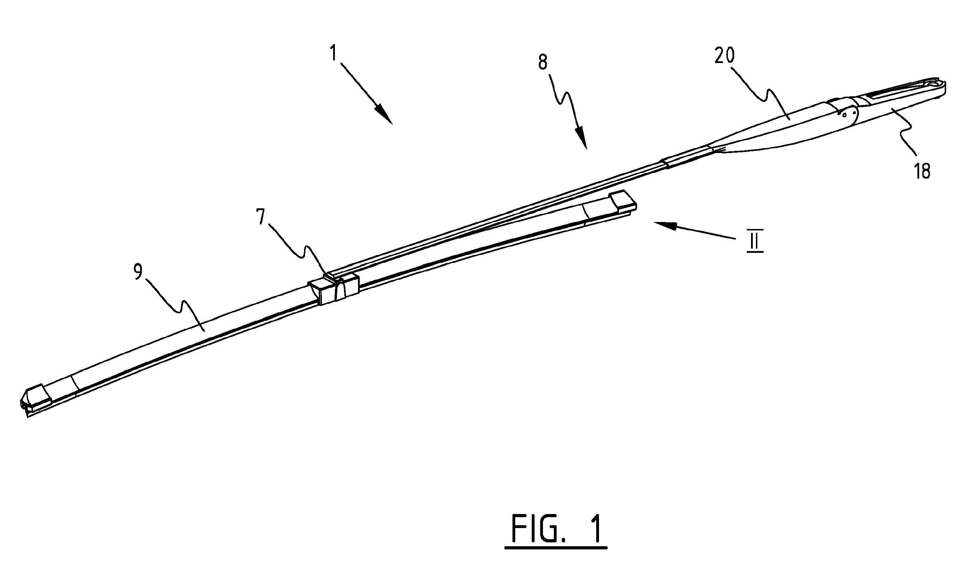

Figure 1 through 4 show a windscreen wiper device 1 according to the prior art. Said windscreen wiper device is built up of an elastomeric wiper blade 2, in the longitudinal sides of which opposing longitudinal grooves 3 are formed, and of longitudinal strips 4 made of spring band steel, which are fitted in said longitudinal grooves 3. Said strips 4 form a flexible carrier element for the rubber wiper blade 2, as it were, which is thus biased in a curved position (the curvature in operative position being that of a windscreen to be wiped). Neighbouring ends 5 of strips 4 are interconnected on either side of the windscreen wiper device 1 by means of connecting pieces 6. The windscreen wiper device 1 is further equipped with a connecting device 7 for an oscillating arm 8, and a spoiler 9.

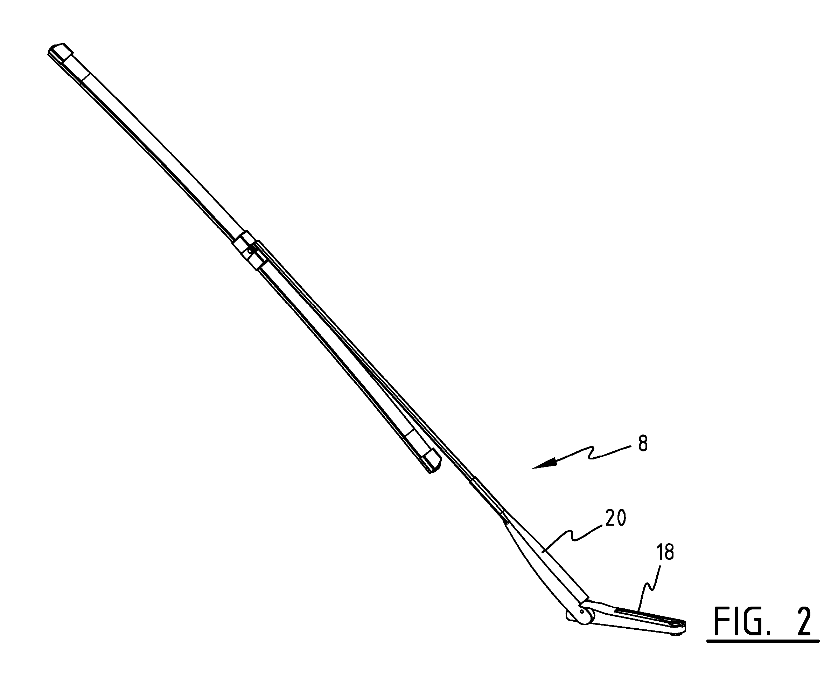

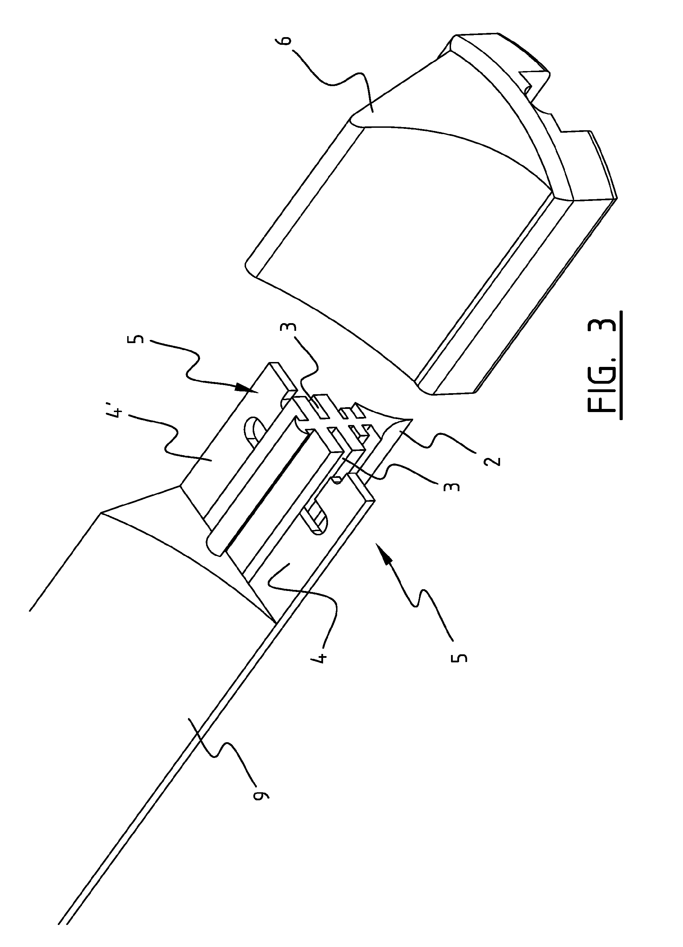

Figures 1 and 2 show the windscreen wiper device 1 in a wiping position and in a mounting position respectively, whereas figure 3 shows a free end of the windscreen wiper device 1 of figure 1.

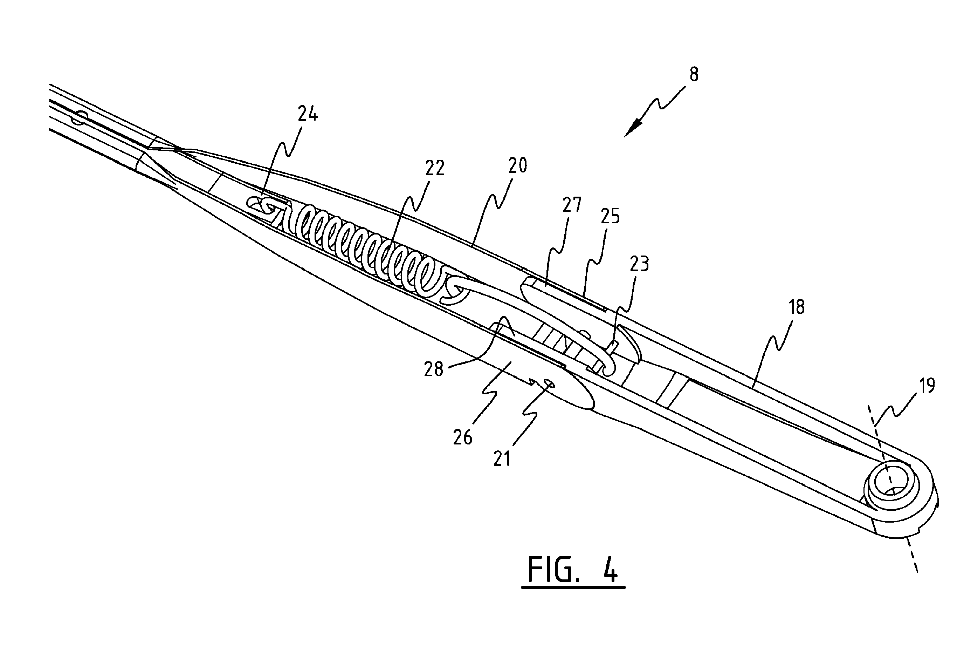

As illustrated in figure 4 the windscreen wiper arm 8 according to the prior art comprises a aluminium mounting head 18 which can be fixed for rotation to a shaft 19 driven, via a mechanism not illustrated, by a small motor. Said windscreen wiper arm 8 further comprises a metallic arm member 20 supported by the mounting head 18, wherein said arm member 20 in turn supports the wiperblade 2 with the help of the connecting device 7, as illustrated in figure 1. The arm member 20 is pivotally connected to the mounting head 18 by means of a pivot pin 21. A spring 22 is hooked with its first end on a pin 23 on the mounting head 18 and with its second end on to a wiper rod 24 of the arm 8 in order to ensure that the arm member 20 and thus the wiper blade 2 connected thereto is pressed onto a windscreen to be wiped. In use, the shaft 19 rotates alternately in a clockwise and in a counterclockwise sense carrying the mounting head 18 into rotation also, which in turn draws the arm member 20 into rotation and by means of the connecting device 7 moves the wiper blade 2. As can be seen from figure 4, the arm member 20 has a substantially U-shaped cross-section near said pivot pin 21 comprising two sidewalls 25,26, wherein a part of the mounting head 18 extends between the sidewalls 25,26 and beyond said pivot pin 18, such that sidewalls 27,28 of said mounting head 18 abut said sidewalls 25,26 of said arm member 20.

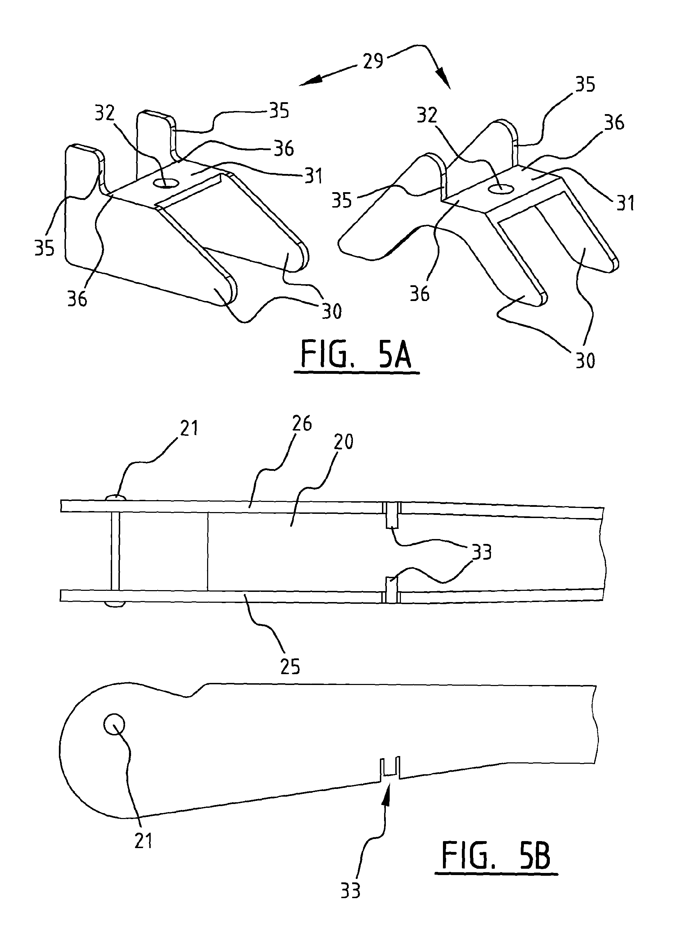

With reference to figure 5A a separate holding element 29 according to the invention is basically of a U-shaped cross-section with two legs 30 (see the embodiment of said holding element 29 on the left) or four legs 30 (see the embodiment of said holding element 29 on the right) and a base 31, wherein a hole 32 is stamped in said base 31. In figure 5B a bottom view and a side view of a arm member 20 of a windscreen wiper arm according to the invention is shown, wherein parts corresponding to those as shown in figure 4 are designated with the same reference numerals. Sidewalls 25,26 of said arm member 20 are provided with opposite lips 33 bend inwardly, i.e. away from said sidewalls 25,26.

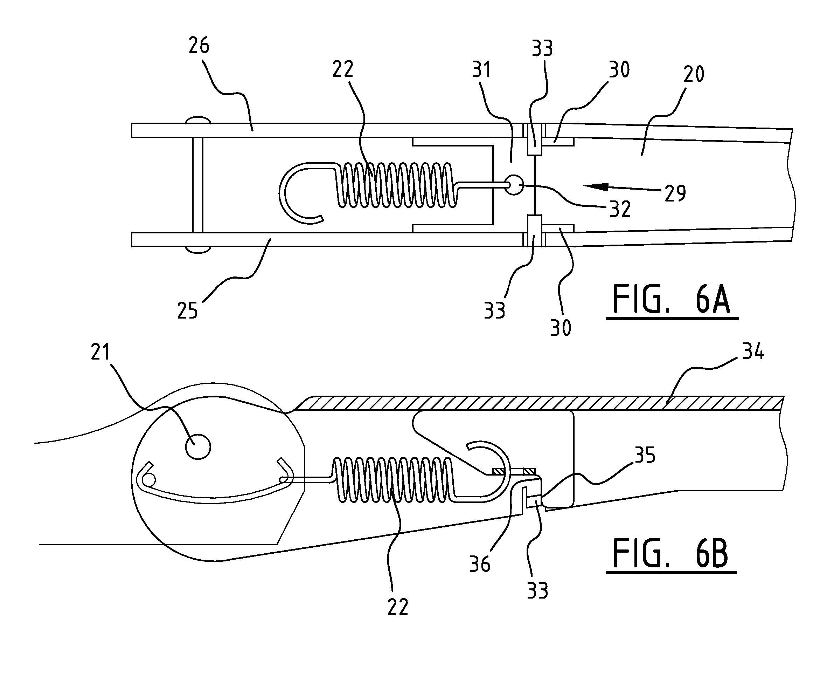

With reference to figures 6A and 6B, said holding element 29 of figure 5A is mounted into said arm member 20, such that said legs 30 of said holding element 29 are faced towards a base 34 of the U-shaped cross-section of said arm member 20, and such that said base 31 of said holding element 29 is faced away from said base 34 of the U-shaped cross-section of said arm member 20. The width of said holding element 29 is chosen such that said legs 30 of said holding element 29 abut said sidewalls 25,26 of said arm member 20. Said spring 22 is hooked with its first end on a pin 21 of a mounting head 18 of the type shown in figures 1, 2 and 4, wherein said spring 22 is hooked with its second end into said hole 32 provided in said base 31 of said holding element 29. In order to prevent any movement of said holding element 29 in longitudinal direction of said arm member 20 under the influence of a force of said spring 22, as well as in transverse direction said inwardly bend lips 33 abut against stop surfaces 35,36 of said holding element 29 (see figure 5A). Said stop surfaces 35,36 are positioned on legs of an L-shaped part of said holding element 29 (see figure 5A).

The invention is not restricted to the embodiment shown, but also extends to other embodiments falling within the scope of the appended claims.

## Claims

1. A windscreen wiper arm (8), particularly for automobiles, comprising a mounting head (18) on a drive shaft (19) and an arm member (20) pivotally connected to the mounting head (18) by means of a pivot (21), wherein the arm member (20) has a substantially U-shaped cross-section near said pivot (21) comprising two sidewalls (25,26), wherein a part of the mounting head (18) extends between the sidewalls (25,26) and beyond said pivot (21), and wherein a spring (22) is hooked with its first end on the mounting head (18), **characterized in that** said spring (22) is hooked with its second end on a single holding element (29) connected to the arm member (20).

2. A windscreen wiper arm (8) according to claim 1, wherein said holding element (29) is detachably connected to said arm member (20).

3. A windscreen wiper arm (8) according to claim 1 or 2, wherein at least one sidewall (25,26) of said U-shaped cross-section of said arm member (20) is provided with a lip (33) abutting against stop surfaces (35,36) of said holding element (29).

4. A windscreen wiper arm (8) according to claim 3, wherein said stop surfaces (35,36) are positioned on the legs of an L-shaped part of said holding element (29).

5. A windscreen wiper arm according to claim 3 or 4, wherein said lip (33) is bend inwardly away from said sidewall (25,26).

6. A windscreen wiper arm (8) according to any of the preceding claims 1 through 5, wherein said spring (22) is hooked with its second end on a base (31) of a U-shaped cross-section of said holding element (29).

7. A windscreen wiper arm (8) according to claim 6, wherein said spring (22) is hooked with its second end into a hole (32) provided in said base (31) of said U-shaped cross-section.

8. A windscreen wiper arm (8) according to any of the preceding claims 1 through 7, wherein the arm member (20) is made of a plastic material.

9. A windscreen wiper device (1) comprising an windshield wiper arm (8) according to any of the preceding claims 1 through 8.

10. A windshield wiper device (1) according to claim 9, wherein it comprises an elastic, elongated carrier element, as well as an elongated wiper blade (2) of a flexible material, which can be placed in abutment with a windscreen to be wiped, which wiper blade (2) includes opposing longitudinal grooves (3) on its longitudinal sides, in which grooves (3) spaced-apart longitudinal strips (4) of the carrier element are disposed, wherein neighbouring ends (5) of said longitudinal strips (4) are interconnected by a respective connecting piece (6), which windscreen wiper device (1) comprises a connecting device (7) for the windscreen wiper arm (8) according to any of the preceding claims 1 through 8.
